# EUROPÄISCHE PATENTSCHRIFT

(11) **EP 1 097 313 B1**
(45) Veröffentlichungstag und Bekanntmachung des Hinweises auf die Patenterteilung: **04.06.2003**
(21) Anmeldenummer: 99932720.8
(22) Anmeldetag: 24.06.1999
(51) Int. Cl.: F16D 69/02

(54) **REIBBELAG, INSBESONDERE FÜR BREMSEN UND KUPPLUNGEN, UND VERFAHREN ZUR HERSTELLUNG EINES REIBBELAGES**
FRICTION LINING, ESPECIALLY FOR BRAKES AND CLUTCHES, AND A METHOD FOR PRODUCING A FRICTION LINING
GARNITURE DE FRICTION, NOTAMMENT POUR FREINS ET EMBRAYAGES, ET SON PROCEDE DE FABRICATION

(30) Priorität: 25.06.1998 DE 19828301
(43) Veröffentlichungstag der Anmeldung: 09.05.2001
(73) Patentinhaber: TMD Friction GmbH, 51381 Leverkusen (DE); Hydro Aluminium Deutschland GmbH, 51149 Köln (DE)
(72) Erfinder: HELL, Manfred, D-57635 Weyerbusch (DE); JAWOREK, Wilfried, D-50996 Köln (DE); HUPPATZ, Werner, D-53119 Bonn (DE); WIESER, Dietrich, D-53125 Bonn (DE)
(74) Vertreter: Dallmeyer, Georg, Dipl.-Ing.
(86) Internationale Anmeldenummer: EP9904379
(87) Internationale Veröffentlichungsnummer: WO99067547

(56) Entgegenhaltungen:
- EP-A- 0 418 756
- EP-A- 0 654 616
- EP-A- 0 790 432
- EP-A- 0 803 658

## Beschreibung

Die Erfindung betrifft einen Reibbelag, insbesondere für Bremsen und Kupplungen, nach dem Oberbegriff des Anspruchs 1, sowie ein Verfahren nach dem Oberbegriff des Anspruchs 14. Die Erfindung betrifft ferner eine Bremse oder Kupplung nach dem Oberbegriff der Ansprüche 16 und 17, sowie die Verwendung einer Anodenlegierung in einer Reibbelagmischung gemäß Anspruch 18.

Derartige Reibbeläge werden für Bremsen und Kupplungen, z.B. für den Einsatz in Kraftfahrzeugen, benötigt.

Übliche Reibbelagrezepturen haben folgenden grundsätzlichen Aufbau:
- Metalle (als Fasern oder Pulver),
- Füllstoffe (inkl. eventueller anorganischer Fasern),
- Gleitmittel (Festschmierstoffe),
- organische Bestandteile (Harze, Kautschuke, organische Fasern, organische Füllstoffe).

Je nach Anforderungsprofil sind diese vier Rohstoffgruppen unterschiedlich proportioniert.

Wesentliche Ziele der Reibmaterialentwicklung ist die Optimierung des Reibwertes in Verbindung mit den Reibpartnern des Reibbelages, die Verringerung des Verschleißes der Reibpartner und die Optimierung des thermischen Verhaltens der Reibpartner.

Bei längerem Stillstand der Fahrzeuge und auch bei rauhen Umgebungsbedingungen, z.B. bei Seeluft, tritt häufig Rost an den eisenhaltigen Reibungspartnern auf, nämlich an der Bremsscheibe oder der Bremstrommel einer Bremsanlage oder an eisenhaltigen Kupplungselementen auf. Die Reibbeläge können beispielsweise infolge Rost derart an dem reibungstechnischen Gegenstück festsitzen, daß eine Betätigung der Kupplung oder ein Lösen der Bremsen nicht möglich ist. Auch für den Fall, daß die Reibbeläge nicht festsitzen, ergeben sich Funktionsstörungen. Kupplung sind dann nicht so weich zu betätigen. Auch bei den Bremsen ergeben sich Störungen im Bremsbetrieb aufgrund einer erhöhten Geräuschentwicklung beim Bremsen, zumindest solange die Rostschicht nicht durch Abrieb entfernt ist. Nachteilig ist dabei auch der erhöhte Verschleiß des eisenhaltigen Reibpartners aufgrund der Zerstörung durch Rost.

Von besonderer Bedeutung ist dieses Problem bei den Seetransporten der Fahrzeuge, die oft wochenlang auf Transportschiffen unterwegs sind.

Aus der EP-A-0 079 732 ist es bereits bekannt, das Auftreten von Rost in den Stahl- und Gußkomponenten der Bremsen und Kupplungen dadurch zu vermeiden, daß das Reibmaterial mit Hilfe eines Flammspritzverfahrens mit einem Metall beschichtet wird. Dieses Metall bildet eine relativ zu Stahl unedlere Metallfläche und besteht aus einer Zink-, Aluminium- oder einer Magnesium-Legierung.

Dieser Lösungsweg verhindert aber lediglich das Rosten während des Transports der Fahrzeuge auf dem Seeweg. Die dünne Schutzschicht ist bei wenigen Betätigungen der Bremsen bzw. der Kupplung entfernt, wodurch bei weiterer Zwischenlagerung der Fahrzeuge auf Abstellplätzen dennoch Rost auftreten kann. Das bekannte Beschichten beseitigt das Problem auch nicht bei Fahrzeugen, die häufiger längere Betriebsunterbrechungen haben.

Der Erfindung liegt daher die Aufgabe zugrunde, einen Reibbelag bereitzustellen, der Korrosionsschutzeigenschaften aufweist.

Zur Lösung dieser Aufgabe dienen die Merkmale des Anspruchs 1 bzw. 14, 16, 17 oder 18.

Die Erfindung sieht in vorteilhafter Weise vor, daß die Reibmaterialmischung eine Aluminium-Zink-Legierung enthält, deren Zink-Anteil in der Legierung über ca. 1 Gew. %, vorzugsweise über ca. 2 Gew.%, beträgt.

Das Vorsehen eines relativ zu Eisen oder Stahl unedleren Metalls in der Reibmaterialmischung verhindert das Rosten des Reibungspartners aus Stahl oder Eisen. Die Aluminium-Zink-Legierungsbestandteile im Reibbelag bildet eine Opfer-Anode, so daß ein Rosten und insbesondere ein Festrosten des Reibungspartners an dem Reibbelag zuverlässig vermieden werden kann. Vorteilhaft ist dabei, daß die Opfer-Anode sich mit dem Verschleiß des Reibbelages stets erneuern kann.

Ein weiterer Vorteil besteht darin, daß durch die Zugabe der Aluminium-Zink-Legierung eine Reibwertvergleichmäßigung erzielt werden kann.

Das Wirksamwerden von korrosionshemmenden Partikeln hängt davon ab, daß ihre Verteilung über den Querschnitt der Reibbeläge gleichmäßig erfolgt. Dies gelingt in besonders günstiger Weise mit einer Anodenlegierung vom Typ AlZn5, die vorzugsweise in Pulverform zugegeben wird. Unter dem Begriff "Anodenlegierung" wird dabei ein Werkstoff und eine Applikationstechnik verstanden, wie sie im Kapitel 5.9.2 für den katholischen Schutz von Stahl im Aluminium-Taschenbuch, 15. Auflage, Seite 737 erläutert ist.

Der Zink-Anteil in der Legierung kann in einem Bereich zwischen 2 und 8 Gew.% liegen.

In besonders bevorzugter Weise wird der Zinkgehalt der Anodenlegierung zwischen 4 Gew.-% und 6 Gew.-% eingestellt, weil sich dann die galvanische Wirkung im Sinne eines Korrosionsschutzes in optimaler Weise entfalten kann.

Das Elektrodenpotential einer Aluminium-Zink-Legierung fällt sehr stark mit zunehmendem Zinkanteil und erreicht ein Minimum ab einem Anteil von ca. 5 Gew.-%. Besonders bevorzugt ist daher ein Zinkanteil von ca. 5 Gew.-%.

Da in den Reibbelägen noch weitere Bestandteile enthalten sind, kommt es zur Erzielung optimaler Wirkungen darauf an, die in der Gesamtmischung vorhandenen Elemente aufeinander abzustimmen. Unter diesem Gesichtspunkt wurde die erfindungsgemäße Anodenlegierung mit folgenden Gehaltsgrenzen optimiert:
Zink 4,5 bis 5,5 %,
Zinn 0,05 bis 0,2 %,
Gallium 0,02 bis 0,25 %,
Silizium max. 0,5 %,
Eisen max. 0,1 %,
sonstige Beimengungen einzeln max. 0,01 %, insgesamt max. 0,05 %, Rest Aluminium.

Durch das Zusammenwirken der optimierten Anodenlegierung mit den übrigen Bestandteilen wird die elektrochemische Wirkung für die gesamte Lebensdauer des Reibbelages konstant gehalten.

Die optimierte Anodenlegierung weist einen zusätzlichen Anteil an Zinn von 0,05 bis 0,2 Gew.-% auf, der das metallene Gitter der Aluminiummatrix günstig verändert und dadurch Passivitätsphänome, wie sie sonst bei Aluminiumwerkstoffen in wässrigen Elektrolyten durch die kaum ionen- und elektronenleitende schützende Oxidschicht auftreten, beseitigt.

Der zusätzliche Gehalt an Gallium in Höhe von 0,02 bis 0,25 Gew.-% wirkt sich im positiven, d.h. aktivierenden Sinne auf die erfindungsgemäße Anodenlegierung aus. Das stationäre Lochfraßpotential der Aluminium-Anodenlegierung wird nochmals abgesenkt, so daß sein Passivbereich sehr stark eingeengt ist und somit die erfindungsgemäße Anodenlegierung im metallischen Kontakt mit Stahl, Eisen, Kupfer oder anderen Aluminiumwerkstoffen etc. die Funktion der Opferanode übernimmt, wobei sie verstärkt abgezehrt wird.

Ein weiterer Vorteil läßt sich mit der erfindungsgemäβen Anodenlegierung dann erreichen, wenn sie in Pulverform in den Reibbelag eingebracht wird. Die Zugabe in Pulverform verringert die unter bestimmten Umgebungsbedingungen auftretenden Anhaftungen von Eisen- und Stahlteilen an den Reibbelägen von Bremsen und Kupplungen und vermindern damit die sogenannte "Haftkorrosion".

Der Gewichtsanteil der Aluminium-Zink-Legierungsbestandteile in der Reibmaterialmischung kann in dem Bereich zwischen 0,5 und 15 Gew.-% liegen.

Die Aluminium-Zink-Legierung wird bevorzugt in Partikelform in die Reibmaterialmischung eingebracht. Als Schmierstoff können Zinnsulfide mit einem Gewichtsanteil zwischen ca. 0,5 bis 10 Gew-.%, vorzugsweise ca. 2 bis 8 Gew.-%, enthalten sein.

Zum Herstellen des Reibbelages ist vorgesehen, die vorzugsweise in Strang- oder Blockform vorliegende Aluminium-Zink-Legierung zunächst zu verflüssigen und anschließend zu verdüsen, um im wesentlichen kugelförmige Partikel herzustellen. Diese Partikel werden dann mit einer üblichen Reibmaterialmischung vermischt und zu einem Reibbelag verpreßt.

Es können aber auch direkt aus der Schmelze der Anodenlegierung pulverförmige Partikel gebildet werden, z.B. durch Verdüsen oder durch Schleudern über den Rand einer rotierenden Scheibe.

Weitere vorteilhafte Merkmale der Erfindung sind den Unteransprüchen zu entnehmen.

Im folgenden werden unter Bezugnahme auf die einzige Zeichnung Ausführungsbeispiele der Erfindung näher erläutert:

Es zeigen:

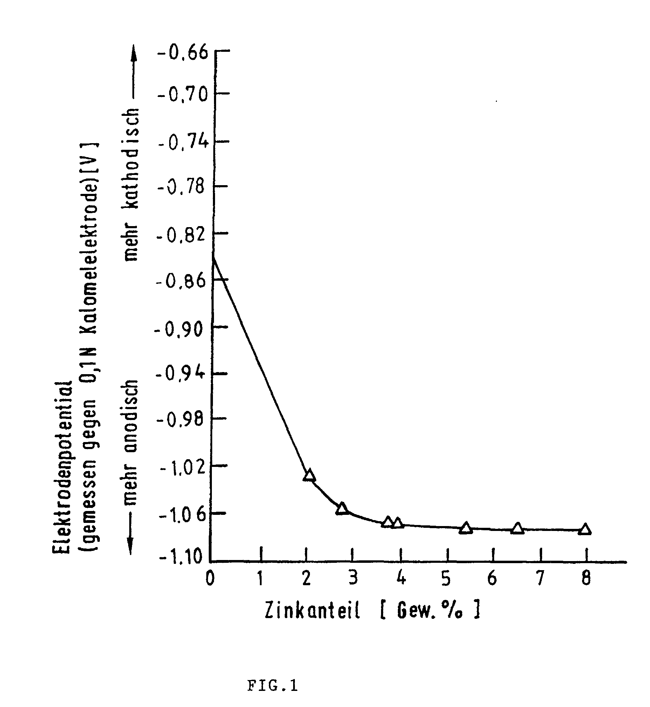

Fig. 1 Einfluß des Zinkanteils in einer Aluminium-Zink-Legierung auf das Elektrodenpotential.

In einer Reibbelagmischung für Brems- und/oder Kupplungsbeläge sind üblicherweise folgende Bestandteile enthalten:
- faserartige Substanzen,
- organische Bindemittel,
- organische und/oder anorganische Füllstoffe,
- Schmierstoffe, und
- Metalle oder Metallverbindungen.

Es wird bei einer solchen Reibbelagmischung vorgeschlagen, Aluminium-Zink-Legierungsbestandteile der Reibbelagmischung hinzuzufügen, die innerhalb des Reibbelages als Opfer-Anode dienen und somit aufgrund eines geringeren elektrochemischen Potentials die eisenhaltigen Reibungspartner eines Reibbelages, nämlich die Bremsscheibe, die Bremstrommel oder Kupplungselemente durch ein geringeres elektrochemisches Potential vor Korrosion, insbesondere Haftkorrosion zu schützen.

Als besonders geeignet sind hierfür Aluminium-Zink-Legierungen mit einem Zinkanteil in der Legierung von über ca. 1 Gew.-%, vorzugsweise über ca. 2 Gew.-%.

Wie aus der Fig. 1 hervorgeht, sinkt das Elektrodenpotential mit steigendem Gewichtsanteil von Zink in einer Aluminium-Zink-Legierung in dem Bereich zwischen 0 und 2 Gew.-% Zink sehr drastisch, um dann bei ca. 4,5 bis 5 Gew.-% ein Minimum zu erreichen, das sich auch bei höheren Gewichtsanteilen Zink nur unwesentlich verändert. Insofern genügt ein Gewichtsanteil zwischen 2 und 8 Gew.-%, vorzugsweise zwischen 4 und 6 Gew.-%, um eine optimale Absenkung des Elektrodenpotentials zu erreichen.

Der Gewichtsanteil der Aluminium-Zink-Legierung im Reibbelag soll ca. zwischen 0,5 Gew.-% und 15 Gew.-% betragen.

Als Füllstoffe können einzeln oder in Kombination mit anderen Füllstoffen, Metalloxide, Metallsilikate und/oder Metallsulfate enthalten sein. Die faserigen Substanzen bestehen vorzugsweise aus Aramidfasern und/oder anderen organischen oder anorganischen Fasern. Als Metalle können außer der Aluminium-Zink-Legierung beispielsweise Stahlwolle und/oder Kupferwolle enthalten sein.

Als Schmierstoffe werden vorzugsweise Zinnsulfide mit einem Gewichtanteil von 0,5 bis 10 Gew.-%. vorzugsweise 2 bis 8 Gew.-% verwendet. Die Zinnsulfide können beispielsweise als Pulver der Reibbelagmischung beigefügt werden.

Die Aluminium-Zink-Legierung wird vorzugsweise in Partikelform in die Reibbelagmischung eingebracht. Hierzu wird die Aluminium-Zink-Legierung beispielsweise in Strang- oder Blockform zunächst verflüssigt und anschließend verdüst, wobei im wesentlichen kugelförmige Aluminium-Zink-Partikel entstehen, die in Partikelform der Reibmaterialmischung beigefügt werden, wobei die Reibmaterialmischung in üblicher Weise verpreßt werden kann.

### Beispiel

Eine Reibmaterialmischung kann beispielsweise wie folgt zusammengesetzt sein:

| Rohstoffe | Gew.-% |
|---|---|
| Stahlwolle | 15-25 |
| Kupfer und/oder Kupferlegierungen | 3-20 |
| Aluminium-Zink-Legierung | 0,5-15 |
| Aluminiumoxid | 0,5- 2 |
| Glimmermehl | 5- 8 |
| Schwerspat | 5-15 |
| Eisenoxid | 5-15 |
| Zinnsulfide | 2- 8 |
| Graphit | 2- 6 |
| Kokspulver | 10-20 |
| Aramidfaser | 1- 2 |
| Harzfüllstoffpulver | 2- 6 |
| Bindeharz | 3- 7 |

## Patentansprüche

1. Reibbelag, insbesondere für Bremsen und Kupplungen, bestehend aus einer Reibmaterialmischung aus
- faserartigen Substanzen,
- organischen Bindemitteln,
- organischen und/oder anorganischen Füllstoffen,
- Schmierstoffen, und
- Metallen oder Metallverbindungen
**dadurch gekennzeichnet,**
**daß** die Reibmaterialmischung eine Aluminium-Zink-Legierung enthält, deren Zinkanteil in der Legierung über ca. 1 Gew.%, vorzugsweise über ca. 2 Gew.%, beträgt.

2. Reibbelag nach Anspruch 1, **dadurch gekennzeichnet, daß** der Zinkanteil der Aluminium-Zink-Legierung ca. 2 bis 8 Gew.%, vorzugsweise 4 bis 6 Gew.-%, beträgt.

3. Reibbelag nach Anspruch 1 oder 2, **dadurch gekennzeichnet, daß** der Gewichtsanteil der Aluminium-Zink-Legierung in der Reibmaterialmischung ca. 0,5 Gew.% und 15 Gew.% beträgt.

4. Reibbelag nach Anspruch 1 bis 3, **dadurch gekennzeichnet, daß** die Aluminium-Zink-Legierung aus einer Anodenlegierung vom Typ AlZn5 besteht.

5. Reibbelag nach einem der Ansprüche 1 bis 4, **dadurch gekennzeichnet, daß** die als Anodenlegierung verwendete Aluminium-Zink-Legierung folgende Zusammensetzung aufweist:
Zink 4,5 bis 5,5 Gew.-%,
Zinn 0,05, bis 0,2 Gew.-%,
Gallium 0,02 bis 0,25 Gew.-%,
Silizium max. 0,5 Gew.-%,
Eisen max. 0,1 Gew.-%,
sonstige Beimengungen einzeln max. 0,01 Gew.-%, insgesamt max. 0,05 Gew.-%, Rest Aluminium.

6. Reibbelag nach Anspruch 1 bis 5, **dadurch gekennzeichnet, daß** die Aluminium-Zink-Legierung in Partikel-, Woll- oder Faserform in die Reibmaterialmischung eingebracht ist.

7. Reibbelag nach einem der Ansprüche 1 bis 6, **dadurch gekennzeichnet, daß** der Anteil
- an Metallen 0 bis 70 Gew.-%,
- an Füllstoffen 3 bis 50 Gew.-%,
- an Schmierstoffen 10 bis 45 Gew.-% und
- an organischen Zusatzstoffen 3 bis 25 Gew.-% beträgt.

8. Reibbelag nach eine der Ansprüche 1 bis 7, **dadurch gekennzeichnet, daß** die Schmierstoffe Zinnsulfide mit einem Gewichtsanteil von 0,5 bis 10 Gew.%, vorzugsweise 2 bis 8 Gew.%, enthalten.

9. Reibbelag nach einem der Ansprüche 1 bis 8, **dadurch gekennzeichnet, daß** als Metalle außer der Aluminium-Zink-Legierung Stahlwolle und/oder Kupferwolle enthalten sind.

10. Reibbelag nach einem der Ansprüche 1 bis 9, **dadurch gekennzeichnet, daß** als Füllstoffe einzeln oder in Kombination mit anderen Füllstoffen Metalloxide, Metallsilikate, und/oder Metallsulfate enthalten sind.

11. Reibbelag nach einem der Ansprüche 1 bis 10, **dadurch gekennzeichnet, daß** die faserartigen Substanzen aus Aramidfasern und/oder anderen organischen oder anorganischen Fasern bestehen.

12. Reibbelag nach einem der Ansprüche 1 bis 11, **dadurch gekennzeichnet, daß** in der Reibmaterialmischung
- Metalle mit einem Anteil von 30 bis 40 Gew.-%,
- Füllstoffe mit einem Anteil von 20 bis 35 Gew.-%,
- feste Schmierstoffe mit einem Anteil von 20 bis 30 Gew.-% sowie
- organische Anteile mit einem Anteil von 5 bis 15 Gew. -%
enthalten sind.

13. Reibbelag nach einem der Ansprüche 1 bis 12, **dadurch gekennzeichnet, daß** in der Reibmaterialmischung
- Stahlwolle mit einem Anteil von 15 bis 25 Gew.-%,
- Kupfer und/oder Kupferlegierungen mit einem Anteil von 3 bis 20 Gew.-%, vorzugweise von 10 bis 20 Gew.-%,
- Aluminium-Zinklegierung mit einem Anteil von 0,5 bis 15 Gew.-%,
- Aluminiumoxid mit einem Anteil von 0,5 bis 2 Gew.-%,
- Glimmermehl mit einem Anteil von 5 bis 8 Gew.%,
- Schwerspat mit einem Anteil von 5 bis 15 Gew.-%,
- Eisenoxid mit einem Anteil von 5 bis 15 Gew.-%,
- Zinnsulfide mit einem Anteil von 2 bis 8 Gew.-%,
- Graphit mit einem Anteil von 2 bis 6 Gew.-%,
- Kokspulver mit einem Anteil von 10 bis 20 Gew.-%,
- Aramidfasern mit einem Anteil von 1 bis 2 Gew.%,
- Harzfüllstoffpulver mit einem Anteil von 2 bis 6 Gew.-% und
- Bindeharz mit einem Anteil von 3 bis 7 Gew.-% enhalten sind.

14. Verfahren zum Herstellen eines Reibbelages für Brems- und Kupplungsbeläge bestehend aus einer Reibmaterialmischung mit
- faserartigen Substanzen,
- organischen Bindemitteln,
- organischen und/oder anorganischen Füllstoffen,
- Schmierstoffen, und
- Metallen oder Metallverbindungen,
**gekennzeichnet durch**
- das Verdüsen einer verflüssigten Aluminium-Zink-Legierung zum Herstellen von im wesentlichen kugelförmigen Partikeln,
- das Vermischen der Aluminium-Zink-Partikel mit der Reibbelagmischung, und
- das Verpressen der Reibmaterialmischung zu einem Reibbelag.

15. Verfahren nach Anspruch 14, **dadurch gekennzeichnet, daß** vor dem Verdüsen das Verflüssigen der Aluminium-Zink-Legierung in Strang- oder Blockform erfolgt.

16. Bremse mit Bremsbacken, deren Reibbelag mit einem eisenhaltigen Reibungspartner zusammenwirkt, **gekennzeichnet durch** einen Reibbelag nach einem der Ansprüche 1 bis 13.

17. Kupplung mit einem Reibbelag, der mit einem eisenhaltigen Reibungspartner zusammenwirkt, **gekennzeichnet durch** einen Reibbelag nach einem der Ansprüche 1 bis 13.

18. Verwendung einer Aluminium-Zink-Legierung in einer Reibmaterialmischung bestehend aus
- faserartigen Substanzen,
- organischen Bindemitteln,
- organischen und/oder anorganischen Füllstoffen,
- Schmierstoffen, und
- Metallen oder Metallverbindungen
zum Herstellen eines Reibbelages mit Korrosionsschutzeigenschaften, bei dem die Aluminium-Zink-Legierungsbestandteile in der Reibmaterialmischung als Opfer-Anode für den Korrosionsschutz der eisenhaltigen Reibungspartner dienen.

## Claims

1. A friction lining, in particular for brakes and clutches, consisting of a friction material mixture of
- fibrous substances,
- organic binding agents,
- organic and/or inorganic fillers,
- lubricants, and
- metals or metal compounds,
**characterized in that**
the friction material mixture contains an aluminum-zinc alloy with a zinc amount in the alloy of more than about 1 percent by weight, preferably more than about 2 percent by weight.

2. The friction lining of claim 1, wherein the amount of zinc in the aluminum-zinc alloy is between 2 and 8 percent by weight, preferably between 4 percent by weight and 6 percent by weight.

3. The friction lining of claim 1 or 2, wherein the weight percentage of the aluminum-zinc alloy in the friction lining mixture is between about 0.5 percent by weight and 15 percent by weight.

4. The friction lining of one of claims 1 to 3, wherein the aluminum-zinc alloy is an anode alloy of the type AlZn5.

5. The friction lining of one of claims 1 to 4, wherein the aluminum-zinc alloy used as the anode electrode has the following composition:
- zinc 4.5 to 5.5%
- tin 0.05 to 0.2%
- gallium 0.02 to 0.25%
- silicon max. 0.5%
- iron max. 0.1%
- other additives each max. 0.01% and a total of max. 0.05%, remainder: aluminum.

6. The friction lining of one of claims 1 to 5, wherein the aluminum-zinc alloy is added to the friction material mixture as particles, wool or fibers.

7. The friction lining of one of claims 1 to 6, wherein the percentage
- of metals is 0 to 70 percent by weight,
- of fillers is 3 to 50 percent by weight,
- of lubricants is 10 to 45 percent by weight, and
- of organic additives is 3 to 25 percent by weight.

8. The friction lining of one of claims 1 to 7, wherein the lubricants contain between 0.5 to 10 percent by weight, preferably 2 to 8 percent by weight, tin sulfides.

9. The friction lining of one of claims 1 to 8, wherein, besides the aluminum-zinc alloy, metals contained are steel wool and/or copper wool.

10. The friction lining of one of claims 1 to 9, wherein the fillers included are, either individually or in combination with other fillers, metal oxides, metal silicates and/or metal sulfates.

11. The friction lining of one of claims 1 to 10, wherein the fibrous substances are aramide fibers and/or other organic or inorganic fibers.

12. The friction lining of one of claims 1 to 11, wherein the friction material mixture includes
- metals in a proportion of 30 to 40 percent by weight,
- fillers in a proportion of 20 to 35 percent by weight,
- solid lubricants in a proportion of 20 to 30 percent by weight, and
- organic components in a proportion of 5 to 15 percent by weight.

13. The friction lining of one of claims 1 to 12, wherein the friction material mixture includes
- steel wool in a proportion of 15 to 25 percent by weight,
- copper and/or copper alloys in a proportion of 3 to 20 percent by weight, preferably 10 to 20 percent by weight,
- aluminum-zinc alloy in a proportion of 0.5 to 15 percent by weight,
- aluminum oxide in a proportion of 0.5 to 2 percent by weight,
- glimmer powder in a proportion of 5 to 8 percent by weight,
- heavy spar in a proportion of 5 to 15 percent by weight,
- iron oxide in a proportion of 5 to 15 percent by weight,
- tin sulfides in a proportion of 2 to 8 percent by weight,
- graphite in a proportion of 2 to 6 percent by weight,
- coke powder in a proportion of 10 to 20 percent by weight,
- aramide fibers in a proportion of 1 to 2 percent by weight,
- resin filler powder in a proportion of 2 to 6 percent by weight, and
- binding resin in a proportion of 3 to 7 percent by weight.

14. A method of producing a friction lining for brake and clutch linings consisting of a friction material mixture including
- fibrous substances,
- organic binders,
- organic and/or inorganic fillers,
- lubricants, and
- metals or metal compounds,
**characterized by**
atomizing a liquified aluminum-zinc alloy for producing substantially spherical particles,
mixing the aluminum-zinc particles with the friction lining mixture, and
pressing friction material mixture to form a friction lining.

15. The method of claim 14, wherein, prior to atomizing, the bars or blocks of aluminum-zinc alloy are liquified.

16. A brake with brake jaws, the friction lining of which cooperates with a iron-containing friction partner, **characterized by** a friction lining of one of claims 1 to 13.

17. A clutch with brake jaws, the friction lining of which cooperates with a iron-containing friction partner, **characterized by** a friction lining of one of claims 1 to 13.

18. Use of an aluminum-zinc alloy in a friction material mixture comprising
- fibrous substances,
- organic binders,
- organic and/or inorganic fillers,
- lubricants, and
- metals or metal compounds,
for producing a friction lining with corrosion protection properties, wherein the aluminum-zinc alloy components in the friction material mixture serve as a sacrificial anode for the corrosion protection of the iron-containing friction partners.

## Revendications

1. Garniture de friction, en particulier pour freins et embrayages, se composant d'un mélange de matériaux de friction constitué de
- substances fibreuses,
- liants organiques,
- charges organiques et/ou minérales
- lubrifiants, et
- métaux ou composés métalliques,
**caractérisée en ce que** le mélange de matériaux de friction contient un alliage aluminium-zinc dont le pourcentage en zinc dans l'alliage est supérieur à 1% en poids environ, de préférence supérieur à 2% en poids environ.

2. Garniture de friction selon la revendication 1, **caractérisée en ce que** le pourcentage en zinc de l'alliage aluminium-zinc est de 2 à 8% en poids environ, de préférence de 4 à 6%.

3. Garniture de friction selon la revendication 1 ou 2, **caractérisée en ce que** le pourcentage en poids de l'alliage aluminium-zinc dans le mélange de matériau de friction est compris entre 0,5% en poids et 15% en poids environ.

4. Garniture de friction selon revendication 1 à 3, **caractérisée en ce que** l'alliage aluminium-zinc se compose d'un alliage anodique de type AlZn5.

5. Garniture de friction selon l'une des revendications 1 à 4, **caractérisée en ce que** l'alliage aluminium-zinc utilisé comme alliage anodique présente la composition suivante:
zinc 4,5 à 5,5% en poids,
étain 0,05 à 0,2% en poids,
gallium 0,02 à 0,25% en poids,
silicium max. 0,5% en poids,
fer max. 0,1% en poids,
impuretés diverses individuellement max. 0,01% en poids, au total max. 0,05% en poids,
le reste étant de l'aluminium.

6. Garniture de friction selon revendication 1 à 5, **caractérisée en ce que** l'alliage aluminium-zinc est introduit dans le mélange de matériaux de friction sous la forme de particules, de laine ou de fibres.

7. Garniture de friction selon l'une des revendications 1 à 6, **caractérisée en ce que**
- le pourcentage de métaux est de 0 à 70% en poids,
- le pourcentage de charges est de 3 à 50% en poids,
- le pourcentage de lubrifiants est de 10 à 45% en poids, et
- le pourcentage d'additifs organiques est de 3 à 25% en poids.

8. Garniture de friction selon l'une des revendications 1 à 7, **caractérisée en ce que** les lubrifiants contiennent du sulfure d'étain selon un pourcentage en poids de 0,5 à 10%, de préférence de 2 à 8% en poids.

9. Garniture de friction selon l'une des revendications 1 à 8, **caractérisée en ce que** de la laine d'acier et/ou de la laine de cuivre sont contenues comme métaux autres que l'alliage aluminium-zinc.

10. Garniture de friction selon l'une des revendications 1 à 9, **caractérisée en ce que** sont contenus, comme charges, individuellement ou en combinaison avec d'autres charges, des oxydes métalliques, des silicates métalliques et/ou des sulfates métalliques.

11. Garniture de friction selon l'une des revendications 1 à 10, **caractérisée en ce que** les substances fibreuses se composent de fibres d'aramide et/ou d'autres fibres organiques ou minérales.

12. Garniture de friction selon l'une des revendications 1 à 11, **caractérisée en ce que** le mélange de matériaux de friction contient
- des métaux selon un pourcentage de 30 à 40% en poids,
- des charges selon un pourcentage de 20 à 35% en poids,
- des lubrifiants solides selon un pourcentage de 20 à 30% en poids, ainsi que
- des composés organiques selon un pourcentage de 5 à 15% en poids.

13. Garniture de friction selon l'une des revendications 1 à 12, **caractérisée en ce que** le mélange de matériaux de friction contient
- de la laine d'acier selon un pourcentage de 15 à 25% en poids,
- du cuivre et/ou des alliages de cuivre selon un pourcentage de 3 à 20% en poids, de préférence de 10 à 20%,
- un alliage aluminium-zinc selon un pourcentage de 0,5 à 15% en poids,
- de l'oxyde d'aluminium selon un pourcentage de 0,5 à 2% en poids,
- des fines de mica selon un pourcentage de 5 à 8% en poids,
- du spath pesant selon un pourcentage de 5 à 15% en poids,
- de l'oxyde de fer selon un pourcentage de 5 à 15% en poids,
- du sulfure d'étain selon un pourcentage de 2 à 8% en poids,
- du graphite selon un pourcentage de 2 à 6% en poids,
- de la poudre de coke selon un pourcentage de 10 à 20% en poids,
- des fibres d'aramide selon un pourcentage de 1 à 2% en poids,
- de la poudre de charge résineuse selon un pourcentage de 2 à 6% en poids, et
- du liant résineux selon un pourcentage de 3 à 7% en poids.

14. Procédé de fabrication d'une garniture de friction pour freins et embrayages se composant d'un mélange de matériaux de friction constitué de
- substances fibreuses,
- liants organiques,
- charges organiques et/ou minérales,
- lubrifiants, et
- métaux ou composés métalliques,
**caractérisé par** les étapes consistant à
- pulvériser un alliage aluminium-zinc liquéfié en vue de produire des particules pour l'essentiel en forme de billes,
- mélanger les particules d'aluminium-zinc avec le mélange de garniture de friction, et
- compresser le mélange de matériaux de friction pour donner une garniture de friction.

15. Procédé selon la revendication 14, **caractérisé en ce que**, avant l'étape de pulvérisation, a lieu la liquéfaction de l'alliage aluminium-zinc se présentant sous forme de blocs ou de barres.

16. Frein comportant des mâchoires de frein, dont la garniture de friction coopère avec un élément de friction associé contenant du fer, **caractérisé par** une garniture de friction selon l'une des revendications 1 à 13.

17. Embrayage comportant une garniture de friction qui coopère avec un élément de friction associé contenant du fer, **caractérisé par** une garniture de friction selon l'une des revendications 1 à 13.

18. Utilisation d'un alliage aluminium-zinc dans un mélange de matériaux de friction se composant de
- substances fibreuses,
- liants organiques,
- charges organiques et/ou minérales,
- lubrifiants, et
- métaux ou composés métalliques,
en vue de fabriquer une garniture de friction, présentant des propriétés anticorrosives, dans laquelle les composants de l'alliage aluminium-zinc dans le mélange de matériaux de friction servent d'anode réactive en vue de protéger contre la corrosion l'élément de friction associé contenant du fer.
